# EUROPÄISCHE PATENTANMELDUNG

(11) **EP 4 625 076 A1**
(43) Veröffentlichungstag der Anmeldung: **01.10.2025**
(21) Anmeldenummer: 24165889.7
(22) Anmeldetag: 25.03.2024
(51) Int. Cl.: G05B 19/4067

(54) **STEUEREINRICHTUNG SOWIE VERFAHREN ZUM EXAKTEN WIEDERHOLEN VON BEWEGUNGEN MIT GEÄNDERTER GESCHWINDIGKEIT**

(71) Anmelder: Siemens Aktiengesellschaft, 80333 München (DE)
(72) Erfinder: Alkafafi, Loay, 91052 Erlangen (DE); Spielmann, Ralf, 70569 Stuttgart (DE)
(74) Vertreter: Siemens Patent Attorneys

(57) **Zusammenfassung**

Die Erfindung betrifft eine Steuereinrichtung (3) für eine Maschine (2) mit wenigstens zwei regelbaren Achsen (X, Y, Z, B, C) zur Bewegung eines von der Maschine (2) umfassten oder mit der Maschine (2) verbundenen Objekts (13) entlang einer vorgegebenen Bahnkurve, wobei jede Achse (X, Y, Z, B, C) wenigstens einen Antrieb umfasst, dem eine Regeleinrichtung zugeordnet ist, und wobei die Steuereinrichtung (3) eine erste Anzahl erster Sollwerte für jede Achse (X, Y, Z, B, C) derart bestimmt, dass wenn die erste Anzahl erster Sollwerte in einem Interpolationstakt der Regeleinrichtung zugeführt werden, sich die Achsen (X, Y, Z, B, C) derart bewegen, dass sich das Objekt (13) mit einer vorgegebenen ersten Geschwindigkeit entlang wenigstens eines Bahnabschnitts (A) der vorgegebenen Bahnkurve bewegt.

Ziel der Erfindung ist es, das Objekt (13) hochgenau mehrfach, jedoch mit unterschiedlichen Geschwindigkeiten und gegebenenfalls unterschiedlichen Bewegungsrichtungen entlang der vorgebbaren Bahnkurve zu bewegen.

Hierzu sieht die Erfindung vor, dass die Steuereinrichtung (3) anhand der ersten Anzahl erster Sollwerte eine zweite, von der ersten Anzahl verschiedene Anzahl an zweiten Sollwerten bestimmt, die, wenn sie der Regeleinrichtung in dem Interpolationstakt vorgegeben werden, das Objekt (13) mit einer von der ersten Geschwindigkeit verschiedenen zweiten Geschwindigkeit zumindest näherungsweise entlang des Bahnabschnitts (A) bewegen.

## Beschreibung

Die Erfindung betrifft eine Steuereinrichtung für eine Maschine mit wenigstens zwei regelbaren Achsen zur Bewegung eines von der Maschine umfassten oder mit der Maschine verbundenen Objekts entlang einer vorgegebenen Bahnkurve, wobei jede Achse wenigstens einen Antrieb umfasst, dem eine Regeleinrichtung zugeordnet ist, wobei die Steuereinrichtung eine erste Anzahl erster Sollwerte für jede Achse derart bestimmt, dass wenn die erste Anzahl erster Sollwerte in einem Interpolationstakt der Regeleinrichtung zugeführt werden, sich die Achsen derart bewegen, dass sich das Objekt mit einer vorgegebenen ersten Geschwindigkeit entlang wenigstens eines Bahnabschnitts der vorgegebenen Bahnkurve bewegt.

Ferner betrifft die Erfindung ein Verfahren zum Betrieb einer derartigen Steuereinrichtung für eine Maschine.

Weiterhin betrifft die Erfindung ein Verfahren zum Betrieb einer derartigen Steuereinrichtung für eine virtuelle Maschine.

Darüber hinaus betrifft die Erfindung ein Computerprogrammprodukt mit Programmbefehlen zur Durchführung der genannten erfindungsgemäßen Verfahrensschritte.

Werkzeugmaschinen werden heutzutage mit Hilfe einer Steuereinrichtung, wie z.B. einer CNC-Steuerung, gesteuert. Dabei "steuert" die Steuereinrichtung anhand eines Teileprogramms die Bewegungen von Maschinenelementen und damit die Bewegungen eines Werkzeuges, welches beispielsweise über eine Werkzeughaltevorrichtung in die Maschine eingebracht wird, relativ zu einem Werkstück, welches ebenfalls in die Maschine eingebracht wird. Dabei ist dem Fachmann klar, dass es sich bei dem Begriff "steuern" um den üblichen Sprachgebrauch und nicht um "steuern" im Sinne der Regelungstechnik handelt. "Steuern" meint hier vor allem die Lageregelung von Achsen, wohinter sich Regelungsvorgänge im Sinne der Regelungstechnik verbergen.

Zur Erstellung eines Teileprogramms werden dabei von einem CAM-System (Computer Aided Manufacturing) vorzugsweise in einem standardisierten Datenformat Bewegungsinformationen über durchzuführende Bewegungen des Werkzeugs erzeugt, z.B. in Form von Linien oder Bögen, und von einem nachgeschalteten Postprozessor eingelesen. Der Postprozessor erzeugt anhand der vom CAM-System erzeugten Bewegungsinformationen, den Kinematik- und Maschinendaten der Werkzeugmaschine sowie dem Befehlssatz der CNC-Steuerung und dem Befehlssatz einer von der CNC-Steuerung umfassten PLC-Steuerung, ein für die jeweilige konkrete Werkzeugmaschine, auf der der Bearbeitungsvorgang stattfinden soll, angepasstes Teileprogramm in Form von auf die konkrete Steuereinrichtung der Werkzeugmaschine angepassten Steuerbefehlen, z.B. in Form von G-Code. Solchermaßen werden die von dem CAM-System vorzugsweise in einem standardisierten Datenformat erzeugten Bewegungsinformationen von dem Postprozessor an die konkret mit der Maschine verbundene Steuereinrichtung angepasst, von dieser eingelesen und umgesetzt.

Der Postprozessor berücksichtigt dabei neben dem konkret verfügbaren CNC-Befehlssatz die konkreten maschinenspezifischen kinematischen Gegebenheiten der Werkzeugmaschine, wie z.B. Kinematik, geometrische Größenverhältnisse, maximale Verfahrbereiche der Antriebsachsen und Maximalgeschwindigkeiten der Maschinenelemente. Diese Daten liegen in Form von Maschinendaten vor. Weiterhin werden vom Postprozessor bei der Erzeugung der Steuerbefehle maschinenspezifische PLC-Funktionalitäten (Programmable Logic Control), wie z.B. Schmierung, Werkzeugwechsel, Türverriegelung etc. berücksichtigt, wobei die konkret verfügbaren PLC-Funktionalitäten in Form von PLC-Befehlssätzen dem Postprozessor ebenfalls zur Verfügung stehen.

Das von dem Postprozessor erzeugte Teileprogramm setzt sich dabei zumindest überwiegend aus Steuerbefehlen zusammen, die von der Steuereinrichtung eingelesen und interpretiert werden. Entsprechend den Steuerbefehlen steuert die Steuereinrichtung die Bewegungen der Maschinenelemente der Werkzeugmaschine und damit die Bewegung des Werkzeugs relativ zu dem Werkstück.

Die Steuereinrichtung bzw. Steuerung, insbesondere CNC-Steuerung, ermittelt nun - ausgehend von dem Teileprogramm - die notwendigen, koordinierten Bewegungen der einzelnen Achsen der Maschine, damit z.B. die gewünschte Bewegung des Werkzeuges relativ zu dem Werkstück erfolgt. Hierzu bestimmt die Steuereinrichtung aus den Programmanweisungen zunächst Lagesollwerte entlang der Bahn, derart, dass in Verbindung mit einer Zeit- und/oder Geschwindigkeitsinformation die gewünschte Bewegung des Objekts (Trajektorie) hinreichend genau spezifiziert ist. Damit das Objekt von der Maschine in der gewünschten Weise bewegt wird, ist es erforderlich, dass die einzelnen Achsen der Maschine koordiniert in einem Achsverbund entsprechend bewegt werden. Hierfür bestimmt die Steuereinrichtung Sollwerte für die einzelnen Achsen, die der Regeleinrichtung für die jeweilige Achse in einem Interpolationstakt zugeführt werden.

Die Ermittlung der vielen einzelnen Punkte, zunächst Sollwerte der Bahn bzw. Trajektorie, anschließend Sollwerte für die einzelnen Achsen, aus den einzelnen Programmanweisungen (Sätzen) wird auch "Interpolation" genannt, aus der sich die koordinierten Achsbewegungen ergeben. So werden die Bewegungsbefehle (Sollwerte) für die einzelnen Antriebe der Maschine erzeugt, deren Einhaltung in den Regelschleifen der Steuereinrichtung für die Antriebe bzw. Umrichter überwacht werden.

Bei der Überführung von G-Code in Lagesollwerte erfolgen i.d.R. Zwischenschritte. Ein solcher Zwischenschritt könnte eine Wavelet-Transformation oder eine Spline-Zerlegung sein. Die Zwischenschritte werden häufig von einem sog. Kompressor ausgeführt.

Um eine bestimmte Bahn in einer bestimmten Geschwindigkeit abzufahren, gibt die Steuerung in einem bestimmten Takt, dem Interpolations- oder kurz IPO-Takt, neue Lagesollwerte für die Positionsregler der einzelnen Achsen aus. Damit sich eine gleichförmige Bewegung ergibt, reicht die Positionsregelung allein nicht aus. Die Steuerung führt daher - neben der Lageregelung - auch eine Geschwindigkeits- (bzw. Drehzahl-) Regelung sowie eine Beschleunigungsregelung, ggf. auch eine Ruck-Regelung durch.

Eine Steuereinrichtung für eine Werkzeugmaschine mit mehreren Maschinenachsen (Achsen), die eine Regeleinrichtung für Antriebe der Achsen der Werkzeugmaschine umfasst, ist z. B. aus der EP3518051A1 bekannt.

Bei Werkzeugmaschinen gibt es immer wieder das Problem, dass deren Arbeit in der Fertigung in unbeabsichtigter Weise unterbrochen wird, z.B. durch einen Stromausfall an der Maschine. Die Unterbrechung kann zu einem beliebigen (nicht vorhersehbaren) Zeitpunkt während einer beliebigen Bearbeitung stattfinden. In vielen Fällen zieht die Unterbrechung keine schwerwiegenden Konsequenzen nach sich. Die Energiezufuhr ist unterbrochen, Maschinenachsen bzw. deren Antriebe bleiben stehen, Steuereinrichtungen (CNC, SPS/PLC usw.) können ohne Strom ebenfalls nicht arbeiten.

Wenn die erforderliche Energie nach der Unterbrechung wieder bereitgestellt wird, kann die Werkzeugmaschine wieder eingeschalten werden. Abhängig davon, ob bei der Unterbrechung der Stromzufuhr Achsen mechanisch in Position gehalten werden konnten oder nicht, ist ggf. an dem gerade bearbeiteten Werkstück kein Schaden entstanden und die Bearbeitung kann fortgesetzt werden.

Hat das Werkstück durch die Unterbrechung der Stromzufuhr Schaden genommen bzw. wurde es zerstört, so wird ggf. die Bearbeitung nicht fortgesetzt und das Werkstück als "Ausschuss" behandelt.

In den meisten Fällen möchte der Maschinenbediener, nachdem die Störung an der Maschine wieder gewährleistet ist, erst das Werkstück bewerten und muss dazu das zuletzt verwendete Werkzeug von dem Werkstück entfernen, sprich rückziehen.

Wenn es kollisionsfrei möglich ist das Werkzeug in Werkzeugrichtung zurückzuziehen, stellen Steuerungen für Werkzeugmaschinen heute schon Funktionen zur Unterstützung des Maschinenbedieners zur Verfügung siehe z.B. Rückzugbewegung in Werkzeugrichtung (JOG-Retract) in Funktionsbeschreibung SINUMERIK ONE Funktionshandbuch Achsen und Spindeln 07/2022, A5E48053595A Seite 828-839 Kapitel 16.12.

Es gibt jedoch auch Fälle, bei denen es nicht möglich ist, einfach in Werkzeugrichtung zurückzuziehen, z.B. beim Gewindebohren, siehe z.B. Funktionsbeschreibung SINUMERIK ONE Funktionshandbuch Achsen und Spindeln 07/2022, A5E48053595A Seite 828-839 Kapitel 16.12.

Im Falle des Gewindebohrens ist es beispielsweise notwendig, gleichzeitig zur Rückzugsbewegung das Werkzeug in der richtigen Richtung zu drehen. Dafür existieren auch bereits Lösungen, insbesondere da diese Rückführbewegung auch im normalen Betrieb der Maschine beim Gewindebohren notwendig ist, um den Gewindebohrer wieder aus dem Gewindeloch zu entfernen.

Es gibt jedoch auch Fälle, bei denen das Werkzeug in das Werkstück auf einer gewissen Bahn eingefädelt wird. Ein Beispiel dafür ist die Herstellung von T-Nuten.

Bei der Herstellung von T-Nuten ist es notwendig, den Fräser auf eine bestimmte Art und Weise in die T-Nut einzufädeln, so dass innenliegende Wände bearbeitet werden können. Wenn während solch einer Bearbeitung der Strom ausfällt und die T-Nut einer beliebigen Bahn (nicht einfach nur achsparallele Bahn) folgt, ist es nicht mehr einfach, das Werkzeug von dem Werkstück zurückzuziehen.

Wenn Informationen über die Historie der Bahnbewegung in der Steuerung vorhanden sind, um einen längeren Weg, z.B. von der Stelle, an der der Strom ausgefallen ist, d.h. die Bearbeitung unterbrochen wurde, bis zu einer Stelle, an der das Werkstück wieder vollständig vom Werkzeug getrennt ist, oder ggf. sogar bis zu der Stelle, an der das Werkzeug eingewechselt wurde, die Bahnbewegung identisch wieder rückwärts abfahren zu können, kann einfach aus einer beliebig komplizierten Situation wieder "ausgefädelt" werden. Eine dazu geeignete Vorgehensweise ist beispielsweise in der Patentveröffentlichung JP2005321979A beschrieben.

Die Patentveröffentlichung JP2005321979A offenbart, dass die Bewegungsbefehle (Lagesollwerte) (Xi, Yi, Zi), die an die Achssteuerkreise der Vorschubachsen X, Y und Z in jedem Interpolationszyklus ausgegeben werden, sequenziell in einer Tabelle gespeichert werden. Weiterhin wird den Lagesollwerten in der Tabelle jeweils eine aus dem Interpolationstakt abgeleitete Zeitinformation hinzugefügt.

Soll nun, z.B. nach einer ungewollten Unterbrechung der Bearbeitung, eine Rückzugsbewegung für das gerade verwendete Werkzeug durchgeführt werden, um dieses von dem Werkstück zu trennen, so werden die im Interpolationstakt (IPO-Takt) gespeicherten Punkte in umgekehrter Reihenfolge wieder aus der Tabelle ausgelesen und den Achsen als neue Lagesollwerte vorgegeben.

Wenn ein Verfahren nach dem aus der JP2005321979A bekannten Stand der Technik angewandt wird, so erfolgt die Rückzugsbewegung mit der identischen Bahngeschwindigkeit wie bei der ursprünglichen Vorwärtsbewegung.

Durch den festen IPO-Takt an einer Steuerung ist auch eine Zeitdauer (Periodendauer) pro IPO-Punkt vorgegeben. Durch diesen fest vorgegebenen "zeitlichen Abstand" zwischen benachbarten, in der Tabelle abgespeicherten IPO-Punkten ist somit auch die Geschwindigkeit der betreffenden Achse in dem jeweiligen Takt-Zeitpunkt (geometrischer Abstand der zwei IPO-Punkte geteilt durch die Periodendauer) und damit letztendlich die Geschwindigkeit der Rückzugsbewegung an sich vorgegeben.

Da das Werkzeug nicht mehr mit dem Material in Berührung kommt, kann es sein, dass der Maschinenbediener nicht mit der exakten Geschwindigkeit ausfädeln will, sondern langsamer oder schneller, abhängig davon, wie es die Dynamik der Maschine zulässt. Abhängig davon, ob z.B. die Bahngeschwindigkeit bei der Originalbearbeitung relativ hoch war, wie z.B. bei einer Tape-Laying-Maschine oder bei einer Holzbearbeitung, möchte der Maschinenbediener eventuell langsamer als mit der Originalgeschwindigkeit ausfädeln. Oder umgekehrt, wenn z.B. die Bahngeschwindigkeit der Originalbearbeitung relativ niedrig war, wie z.B. beim Drehen mit Planzug, möchte der Maschinenbediener eventuell schneller als mit der Originalgeschwindigkeit ausfädeln.

In den heute bekannten Verfahren werden Zwischenpunkte der gefahrenen Bahn gespeichert und daraus in Form neuer Programmanweisungen eine neue Bahn erzeugt, die durch oder in der Nähe der gespeicherten Bahn verläuft. Die ursprünglich erzeugte Bahn wird dann bei der Rückzugsbewegung mittels der neuen Programmanweisungen in umgekehrter Bewegungsrichtung gegenüber der ursprünglichen Bahn abgefahren, ggf. mit höherer bzw. niedrigerer Geschwindigkeit gegenüber der ursprünglichen Bewegung, siehe z.B. Patentveröffentlichung DE401 0364A1.

Bei der beschriebenen Erzeugung der neuen Bahn entsteht eine Differenz zwischen der ursprünglich gefahrenen Bahn und der Rückzugsbahn. Diese unerwünschten Unterschiede können leicht zu Kollisionen führen und das Werkstück und/oder das Werkzeug beschädigen.

Aufgabe der vorliegenden Erfindung ist es, ein Objekt hochgenau mehrfach, jedoch mit unterschiedlichen Geschwindigkeiten und gegebenenfalls unterschiedlichen Bewegungsrichtungen entlang einer vorgebbaren Bahnkurve zu bewegen.

Diese Aufgabe wird gemäß der Erfindung gelöst durch eine Steuereinrichtung für eine Maschine mit wenigstens zwei regelbaren Achsen zur Bewegung eines von der Maschine umfassten oder mit der Maschine verbundenen Objekts entlang einer vorgegebenen Bahnkurve, wobei jede Achse wenigstens einen Antrieb umfasst, dem eine Regeleinrichtung zugeordnet ist, wobei die Steuereinrichtung eine erste Anzahl erster Sollwerte für jede Achse derart bestimmt, dass wenn die erste Anzahl erster Sollwerte in einem Interpolationstakt der Regeleinrichtung zugeführt werden, sich die Achsen derart bewegen, dass sich das Objekt mit einer vorgegebenen ersten Geschwindigkeit entlang wenigstens eines Bahnabschnitts der vorgegebenen Bahnkurve bewegt,
wobei die Steuereinrichtung anhand der ersten Anzahl erster Sollwerte eine zweite, von der ersten Anzahl verschiedene Anzahl an zweiten Sollwerten bestimmt, die, wenn sie der Regeleinrichtung in dem Interpolationstakt vorgegeben werden, das Objekt mit einer von der ersten Geschwindigkeit verschiedenen zweiten Geschwindigkeit zumindest näherungsweise entlang des Bahnabschnitts bewegen.

Ferner wird die Aufgabe gelöst durch ein Verfahren zum Betrieb einer derartigen Steuereinrichtung für eine Maschine.

Weiterhin wird die Aufgabe gelöst durch ein Verfahren zum Betrieb einer derartigen Steuereinrichtung für eine virtuelle Maschine.

Die Erfindung sieht vor, dass das Objekt erneut entlang des Bahnabschnitts bewegt wird, jedoch mit gegenüber der ursprünglichen Bewegung veränderter Geschwindigkeit und ggf. in entgegengesetzter Bewegungsrichtung. Die Erzeugung dieser zweiten Bewegung beruht jedoch nicht primär auf der vorgegebenen Bahnkurve, beispielsweise indem Punkte entlang dieser Bahnkurve erneut vorgegeben werden, sondern auf zwischengespeicherten, den Reglern für die einzelnen Achsen zugeführten Sollwerten, die entweder direkt den Reglern erneut als Sollwerte zugeführt werden oder aus denen neue Sollwerte für die Regler bestimmt werden. Die so erzeugte Bahnkurve stimmt damit sehr genau mit der ursprünglich erzeugten Bahnkurve überein, insbesondere sehr viel genauer als dies z.B. bei einer Bestimmung der neuen Bahnkurve auf Basis der ursprünglichen Bahnkurve bzw. auf Basis einzelner Punkte dieser Bahnkurve der Fall wäre.

Neben dem bereits genannten Vorteil, dass bei einer Wiederholung einer Bewegung - ggf. in umgekehrter Bewegungsrichtung - auf Basis zuvor bei der ursprünglichen Bewegung ermittelter Sollwerte die wiederholte Bewegung sehr genau mit der ursprünglichen Bewegung übereinstimmt, weist die Erfindung noch weitere Vorteile auf. So müssen für die Wiederholung der Bewegung zumindest nicht bei allen für die Bewegung erforderlichen Größen entsprechende Sollwerte, z.B. Lagesollwerte, neu bestimmt werden, sondern es wird lediglich auf die bei der ursprünglich ausgeführten Bewegung ermittelten Sollwerte zurückgegriffen. Dies spart Rechenaufwand. Darüber hinaus ermöglicht es die Erfindung, die Bewegungsgeschwindigkeit bei der Wiederholung der Bewegung gegenüber der ursprünglichen Bewegung zu variieren, ohne dabei den Interpolationstakt der Steuereinrichtung ändern zu müssen. Der Interpolationstakt wird üblicherweise vom Hersteller der Steuereinrichtung fest vorgegeben und ist nicht von einem Benutzer veränderbar. Eine Änderung des Interpolationstaktes würde eine Vielzahl weiterer Änderungen bei der betreffenden Steuereinrichtung nach sich ziehen und ist daher nicht ohne erheblichen Mehraufwand möglich.

Bei der erfindungsgemäßen Steuereinrichtung handelt es sich vorzugsweise um eine CNC-Steuerung und bei der davon gesteuerten Maschine um eine Werkzeugmaschine. Es kommen aber auch andere Steuerungs- und Maschinen-Typen in Betracht, z.B. eine Robotersteuerung zur Steuerung eines damit verbundenen Industrieroboters.

Die Maschine umfasst wenigstens zwei, in der Regel jedoch mehr als zwei, insbesondere fünf oder sechs regelbare, insbesondere lageregelbare Achsen (Rund- bzw. Rotationsachsen und/oder Linearachsen), die wie eingangs beschrieben in einem Achsverbund (Verbund) verfahren werden und dadurch die Bewegung des Objekts entlang der gewünschten Bahnkurve bzw. Trajektorie bewirken.

Bei dem von der Maschine umfassten oder mit der Maschine verbundenen Objekt handelt es sich beispielsweise um ein Maschinenelement wie eine Werkzeug- oder eine Werkstückaufnahme. Weiterhin kann es sich um ein lösbar mit der Maschine verbindbares Teil, insbesondere einen Effektor handeln. Darunter fallen insbesondere Werkzeuge, Greifer etc. In der Regle wird die Bahnkurve nicht für das gesamte Objekt vorgegeben, sondern lediglich für einen bestimmten Punkt des Objekts, z.B. einen Schwerpunkt, einen Mittelpunkt, einen Nullpunkt oder einen TCP (Tool Center Point) bei einem Werkzeug.

Zur Regelung der Achsen umfasst die Steuereinrichtung eine Regeleinrichtung bzw. ist der Steuereinrichtung eine Regeleinrichtung zugeordnet. Diese wiederum umfasst einen oder mehrere Regler für die einzelnen Achsen, z.B. zur Lageregelung, Drehzahlregelung, Geschwindigkeitsregelung, Stromregelung etc.

Eine Ausführungsform der Erfindung sieht vor, dass die erste und/oder die zweite Geschwindigkeit durch den Benutzer vorgebbar, insbesondere durch ein Bedienelement an der Steuereinrichtung einstellbar ist. Beispielsweise kann dafür ein an der Steuereinrichtung vorhandener Drehregler verwendet werden. Vorteilhaft kann damit sowohl eine höhere als auch eine langsamere Geschwindigkeit im Vergleich zu der ursprünglich gefahrenen Geschwindigkeit eingestellt werden.

Eine Ausführungsform der Erfindung sieht vor, dass die ersten und die zweiten Sollwerte derart bestimmt werden, dass sich das Objekt mittels der ersten Sollwerte in einer ersten Bewegungsrichtung entlang des Bahnabschnitts bewegt und mittels der zweiten Sollwerte in derselben Bewegungsrichtung oder einer der erste Bewegungsrichtung entgegengesetzten zweiten Bewegungsrichtung entlang des Bahnabschnitts bewegt. Auch die vorgesehene Bewegungsrichtung (vorwärts, rückwärts) ist vorteilhaft durch den Benutzer der Steuereinrichtung einstellbar. Die entsprechende Steuereinrichtung kann daher sowohl dazu verwendet werden, um eine bereits durchgeführte Bewegung hochgenau zu wiederholen oder zum Freifahren, bei dem beispielsweise ein Werkzeug zumindest ein Stück weit rückwärts entlang eines zuvor vorwärts gefahrenen Bahnabschnitt bewegt wird. Die Bewegungsrichtung ergibt sich dabei aus der Reihenfolge, in der die zweiten Sollwerte erzeugt oder abgerufen werden. Werden die zweiten Sollwerte in der gleichen Reihenfolge erzeugt bzw. abgerufen wie die ersten, so ergibt sich daraus eine Bewegung in derselben Bewegungsrichtung. Werden die zweiten Sollwerte hingegen in umgekehrter Reihenfolge erzeugt bzw. abgerufen wie die ersten, so ergibt sich daraus eine Bewegung in umgekehrter Bewegungsrichtung.

Bei den den Antrieben bzw. der Regeleinrichtung vorgegebenen Sollwerten handelt es sich insbesondere um Lagesollwerte und/oder Drehzahlsollwerte und/oder Geschwindigkeitssollwerte und/oder Beschleunigungssollwerte und/oder Rucksollwerte und/oder Spannungssollwerte und/oder Stromsollwerte. Die Regeleinrichtung sorgt insbesondere dafür, dass die sich auf Grund der vorgegebenen Sollwerte ergebenden Istwerte maximal lediglich um ein jeweils vorgebbares Maximum von den Sollwerten unterscheiden.

Zur Bestimmung der zweiten Sollwerte aus den ersten Sollwerten gibt es unterschiedliche Ansätze. Beispielsweise können die zweiten Sollwerte aus den ersten Sollwerten dadurch hervorgehen, dass die zweiten Sollwerte nur jeden n-ten Sollwert der ersten Sollwerte umfassen, wobei n eine natürliche Zahl beginnend mit der Zahl 2 ist. Beispielsweise ist bei den zweiten Sollwerten jeder zweite Sollwert gegenüber den ersten Sollwerten gestrichen. Dem betreffenden Bahnabschnitt sind damit nur halb so viele zweite Sollwerte wie erste Sollwerte zugeordnet. Werden die zweiten Sollwerte mit demselben Interpolationstakt abgerufen und der Regeleinrichtung zugeführt, so ergibt sich daraus automatisch die doppelte Verfahrgeschwindigkeit.

Ergeben sich die zweiten Sollwerte aus den ersten dadurch, dass zwischen zwei benachbarte erste Sollwerte jeweils ein Zwischenwert eingefügt wird, so sind dem betreffenden Bahnabschnitt am Ende doppelt so viele Sollwerte zugeordnet wie zuvor. Werden die so gebildeten zweiten Sollwerte mit demselben Interpolationstakt abgerufen und der Regeleinrichtung zugeführt, so ist damit die Verfahrgeschwindigkeit gegenüber der ursprünglichen halbiert.

Die beiden zuletzt beschriebenen Vorgehensweisen haben den Vorteil, dass zumindest einige der zweiten Sollwerte exakt mit korrespondierenden ersten Sollwerten übereinstimmen. Die daraus abgeleitete Wiederholung der Bewegung entlang des Bahnabschnitts (ggf. in umgekehrter Bewegungsrichtung) stimmt daher besonders genau mit der ursprünglichen Bewegung überein.

Wie ersichtlich ist, lassen sich durch das Weglassen oder Einfügen von Sollwerten nur diskrete Geschwindigkeitsänderungen bewirken. Für mehr oder weniger stufenlose Geschwindigkeitsänderungen wird vorteilhaft eine andere Vorgehensweise umgesetzt, wie nachfolgend beschrieben wird.

Aus den ersten Sollwerten einer jeden Achse wird jeweils eine Funktion bestimmt, so dass die ersten Sollwerte lediglich um eine vorgegebene Toleranz von dieser Funktion abweichen. Im Fall einer Grafik-Funktion wird diese nun "abgetastet", jedoch mit einer gegenüber der ersten Anzahl erster Sollwerte veränderten zweiten Anzahl zweiter Sollwerte. Analog ist auch eine mathematische Beschreibung der Funktion durch eine Funktionsgleichung möglich. Verfahren zum Bestimmen der Funktionsgleichung aus einer Anzahl an Punkten sind dem Fachmann aus der Mathematik hinlänglich bekannt. Die zweiten Sollwerte können dann in einfacher Weise durch einfaches Einsetzen der gewünschten Zeitpunkte in die Funktionsgleichung bestimmt werden.

Je nachdem, ob die Anzahl zweiter Sollwerte höher oder niedriger als die erste Anzahl erster Sollwerte ist, verlangsamt oder erhöht sich die Geschwindigkeit, mit der der betreffende Bahnabschnitt gefahren wird. Werden die so aus den ersten Sollwerten ermittelten zweiten Sollwerte nun der Regeleinrichtung in umgekehrter Reihenfolge zugeführt, so wird der sich hinter den Sollwerten verbergende Bahnabschnitt in umgekehrter Bewegungsrichtung abgefahren.

Die zuletzt beschriebene Ausführungsform kann ggf. noch dadurch ergänzt bzw. verbessert werden, dass die aus den ersten Sollwerten gebildete Funktion zunächst geglättet wird, bevor diese zum Bestimmen der zweiten Sollwerte abgetastet wird. Ebenso wie für das Bilden der Funktion aus den Sollwerten an sich sind dem Fachmann auch für das Glätten zahlreiche Algorithmen aus dem Stand der Technik bekannt. Die geglättete Funktion führt letztendlich zu einem geglätteten Bahnverlauf.

Die beschriebene Vorgehensweise kann dazu verwendet werden, eine mit der Steuereinrichtung verbundene Maschine direkt entsprechend zu steuern.

Die beschriebene Vorgehensweise kann alternativ ebenso dazu verwendet werden, zunächst in einer Simulation eine mit der Steuereinrichtung verbundene virtuelle Maschine entsprechend zu steuern, beispielsweise um das gewünschte Verhalten der Steuereinrichtung bzw. eines Steuerprogramms zunächst zu testen. Dabei sind dem Fachmann die Erzeugung und der Betrieb einer virtuellen Maschine an sich, insbesondere auf Basis einer vorhandenen realen Maschine, hinlänglich bekannt.

Die eingangs gestellte Aufgabe wird ferner gelöst durch ein Verfahren zum Betrieb einer Steuereinrichtung für eine Maschine mit wenigstens zwei regelbaren Achsen zur Bewegung eines von der Maschine umfassten oder mit der Maschine verbundenen Objekts entlang einer vorgegebenen Bahnkurve,
wobei jede Achse wenigstens einen Antrieb umfasst, dem eine Regeleinrichtung zugeordnet ist, wobei mittels der Steuereinrichtung eine erste Anzahl erster Sollwerte für jede Achse derart bestimmt werden, dass wenn die erste Anzahl erster Sollwerte in einem Interpolationstakt der Regeleinrichtung zugeführt werden, sich die Achsen derart bewegen, dass sich das Objekt mit einer vorgegebenen ersten Geschwindigkeit entlang wenigstens eines Bahnabschnitts der vorgegebenen Bahnkurve bewegt,
wobei mittels der Steuereinrichtung anhand der ersten Anzahl erster Sollwerte eine zweite, von der ersten Anzahl verschiedene Anzahl an zweiten Sollwerten bestimmt werden, die, wenn sie der Regeleinrichtung in dem Interpolationstakt vorgegeben werden, das Objekt mit einer von der ersten Geschwindigkeit verschiedenen zweiten Geschwindigkeit zumindest näherungsweise entlang des Bahnabschnitts bewegen.

Das beschriebene Verfahren kann dadurch genauer spezifiziert werden, dass:
- die erste und/oder die zweite Geschwindigkeit durch einen Benutzer der Steuereinrichtung vorgegeben wird;
- die ersten und die zweiten Sollwerte derart bestimmt werden, dass sich das Objekt mittels der ersten Sollwerte in einer ersten Bewegungsrichtung entlang des Bahnabschnitts bewegt und mittels der zweiten Sollwerte in einer der erste Bewegungsrichtung entgegengesetzten zweiten Bewegungsrichtung entlang des Bahnabschnitts bewegt;
- die Sollwerte Lagesollwerte und/oder Drehzahlsollwerte und/oder Geschwindigkeitssollwerte und/oder Beschleunigungssollwerte und/oder Rucksollwerte und/oder Spannungssollwerte und/oder Stromsollwerte umfassen;
- die Sollwerte in einer Speichereinrichtung der Steuereinrichtung als ursprüngliche Sollwerte gespeichert werden, wobei anhand der ursprünglichen Sollwerte eine Funktion ermittelt wird, wobei anhand der Funktion neue Sollwerte ermittelt werden, die ebenfalls die Funktion beschreiben und wobei eine erste Anzahl ursprünglicher, die Funktion beschreibender Sollwerte verschieden ist von einer zweiten Anzahl neuer, die Funktion beschreibender Sollwerte;
- die Funktion zunächst geglättet wird und die neuen Sollwerte anhand der geglätteten Funktion ermittelt werden;
- die zweiten Sollwerte aus den ersten Sollwerten dadurch hervorgehen, dass die zweiten Sollwerte nur jeden n-ten Sollwert der ersten Sollwerte umfassen, wobei n eine natürliche Zahl beginnend mit der Zahl 2 ist;
- die zweiten Sollwerte aus den ersten Sollwerten dadurch hervorgehen, dass zwischen zwei benachbarte erste Sollwerte jeweils ein Zwischenwert oder n Zwischenwerte eingefügt wird bzw. werden, wobei n eine natürliche Zahl beginnend mit der Zahl 2 ist.

Die eingangs gestellte Aufgabe wird ferner gelöst durch ein Verfahren zum Betrieb einer Steuereinrichtung für eine virtuelle Maschine mit wenigstens zwei virtuellen, regelbaren Achsen zur Simulation einer Bewegung eines von der virtuellen Maschine umfassten oder mit der virtuellen Maschine verbundenen virtuellen Objekts entlang einer vorgegebenen Bahnkurve,
wobei jede virtuelle Achse wenigstens einen virtuellen Antrieb umfasst, dem eine virtuelle Regeleinrichtung zugeordnet ist,
wobei mittels der Steuereinrichtung eine erste Anzahl erster Sollwerte für jede virtuelle Achse derart bestimmt werden, dass wenn die erste Anzahl erster Sollwerte in einem Interpolationstakt der Regeleinrichtung zugeführt werden, sich die virtuellen Achsen derart bewegen, dass sich das virtuelle Objekt mit einer vorgegebenen ersten Geschwindigkeit entlang wenigstens eines Bahnabschnitts der vorgegebenen Bahnkurve bewegt,
wobei mittels der Steuereinrichtung anhand der ersten Anzahl erster Sollwerte eine zweite, von der ersten Anzahl verschiedene Anzahl an zweiten Sollwerten bestimmt werden, die, wenn sie der Regeleinrichtung in dem Interpolationstakt vorgegeben werden, das virtuelle Objekt mit einer von der ersten Geschwindigkeit verschiedenen zweiten Geschwindigkeit zumindest näherungsweise entlang des Bahnabschnitts bewegen.

Auch das Verfahren zum Betrieb einer Steuereinrichtung für eine virtuelle Maschine kann analog durch die oben beschriebenen, speziellen Ausführungsformen genauer spezifiziert werden.

Ferner kann auch die Steuereinrichtung selbst als virtuelle Steuereinrichtung ausgebildet sein, insbesondere in Form einer auf einem Rechner lauffähigen Software, die das Verhalten der realen Steuereinrichtung simuliert. Auch die Komponenten der virtuellen Steuereinrichtung, z.B. die von der realen Steuereinrichtung umfasst Regeleinrichtung, ist dann als virtuelle Regeleinrichtung implementiert.

Die eingangs gestellte Aufgabe wird ferner gelöst durch ein Computerprogrammprodukt mit Programmbefehlen zur Durchführung der genannten erfindungsgemäßen Verfahrensschritte. Die Programmbefehle können auf einem Datenträger gespeichert sein und von der Steuereinrichtung eingelesen werden oder in Form eines Datenstroms auf die Steuereinrichtung übertragen werden.

Die Erfindung wird nachfolgend anhand von Ausführungsbeispielen exemplarisch näher beschrieben und erläutert. Dabei zeigen:
FIG 1 Eine Werkzeugmaschine zur Durchführung eines erfindungsgemäßen Verfahrens,
FIG 2 und 3 einen Bahnabschnitt, entlang dem ein Werkzeug relativ zu einem Werkstück bewegt wird,
FIG 4A, 4B; 5A, 5B; 6A, 6B; 7A, 7B Funktionsgrafen bei der Bewegung einzelner Maschinenachsen,
FIG 8 Verfahrensschritte bei der Durchführung eines erfindungsgemäßen Verfahrens.

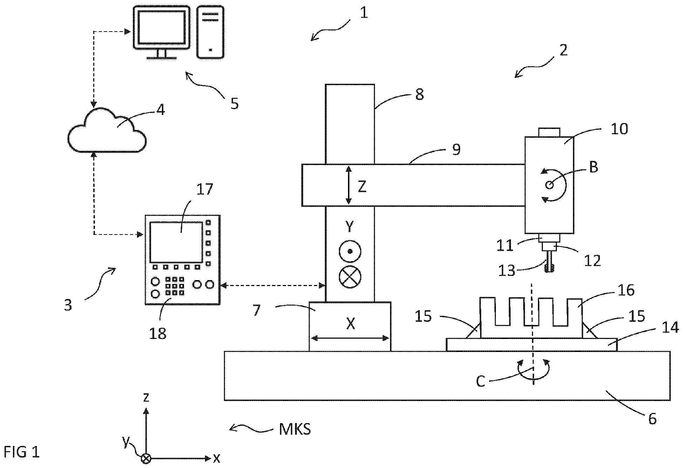

In FIG 1 zeigt schematisch ein Werkzeugmaschinensystem 1. Das Werkzeugmaschinensystem 1 umfasst eine Maschine in Form einer Werkzeugmaschine 2. Ferner umfasst das Werkzeugmaschinensystem 1 eine mit der Werkzeugmaschine 2 verbundene Steuereinrichtung in Form einer CNC-Steuerung 3 zur Steuerung der Werkzeugmaschine 2. Darüber hinaus umfasst das Werkzeugmaschinensystem 1 eine über ein Netzwerk 4, zum Beispiel das Internet, verbundene externe Recheneinrichtung in Form eines CAD/CAM/PP-Systems 5.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems MKS verstellbar ist.

Das erste Tragelement 7 ist über einen in x-Richtung verstellbaren Linearantrieb (nicht dargestellt) mit einem ruhenden Maschinengestellt 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt einen Spindelantrieb 10, der seinerseits um eine zur Y-Achse parallele, lagegeregelte Rundachse B schwenkbar ist. Der Spindelantrieb 10 weist seinerseits eine um eine Spindelachse (nicht dargestellt) rotierbare, drehzahl- und/oder lagegeregelte Werkzeugspindel 11 auf, in die ein Werkzeughalter 12 mit dem daran befestigten Werkzeug 13 eingespannt ist.

Weiterhin umfasst die Werkzeugmaschine 2 eine um eine parallel zur Z-Achse ausgerichtete, lagegeregelte Werkzeugtischachse C, um die ein Werkstücktisch 14 rotierbar ist.

Der Werkzeugtisch 14 ist ebenfalls mit dem ruhenden Maschinengestellt 6 verbunden und an dem Werkzeugtisch 14 ist mittels der Werkzeughalter 15 ein Werkstück 16 befestigt.

Die Werkzeugmaschine 2 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 2 ist mit der CNC-Steuerung 3 verbunden, die anhand eines Teileprogramms und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte insbesondere anhand des Teileprogramms, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem CAD/CAM/PP-System 5 außerhalb der CNC-Steuerung 3 erzeugt und von dort, insbesondere über das Netzwerk 4, auf die CNC-Steuerung 3 übertragen.

Bei der Abarbeitung des Teileprogramms erzeugt die CNC-Steuerung 3 in einem bestimmten Takt, dem Interpolationstakt oder kurz IPO-Takt, Lagesollwerte x, y und z für die Linearachsen sowie Winkellagesollwerte β und γ für die Rundachsen B und C. Durch diese Lagesollwerte wird das Werkzeug 13 mit vorgegebener Orientierung relativ zu dem Werkstück 16 entlang einer Bewegungsbahn (Bahnkurve bzw. Trajektorie) bewegt.

Neben den reinen Lagesollwerten sind mittels der CNC-Steuerung auch die Dynamik der Relativbewegung bzw. der Bewegung der einzelnen Achsen betreffende Größen, insbesondere die Geschwindigkeit, die Beschleunigung oder der Ruck, ermittelbar bzw. einstellbar. Hierfür ermittelt die CNC-Steuerung Sollwerte für die betreffenden Größen und gibt diese in dem Interpolationstakt einer Regeleinrichtung vor, die die Regelung der betreffenden Größe bzw. Größen für die jeweilige Achse ausführt. Von der Regeleinrichtung können entsprechend Lageregler, Drehzahlregler, Geschwindigkeitsregler, Beschleunigungsregler, Ruckregler, Stromregler oder Spannungsregler umfasst sein.

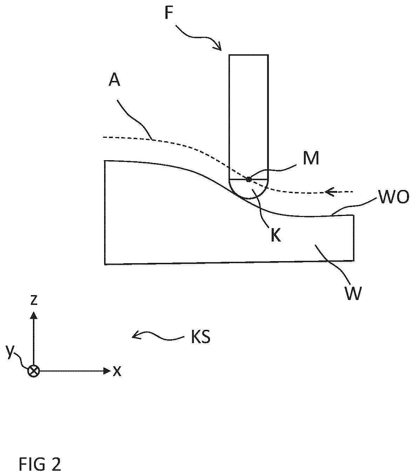

FIG 2 zeigt exemplarisch die Bearbeitung eines Teilbereichs eines Werkstücks W mittels eines Werkzeugs in Form eines Kugelfräsers F mit einem halbkugelförmigen Schneidkopf K, bei dem mehrere Schneiden bzw. Zähne (nicht dargestellt) über den Umfang des Schneidkopfes K verteilt sind.

Zur Bearbeitung des Werkstücks W wird der Kugelfräser F entlang vorgegebener Bahnen, die bezüglich einem kartesischen Koordinatensystem MKS (Maschinenkoordinatensystem) mit den Koordinaten-Achsen x, y und z definiert sind, derart über die Werkstückoberfläche WO geführt, dass mittels einer spanabhebenden Bearbeitung eine gewünschte Werkstückoberfläche WO des Werkstücks W erzeugt wird. Die Bahnen des Werkzeugs können dabei parallel zu der x-z-Ebene verlaufen, entsprechend dem exemplarisch dargestellten Bahnabschnitt A, aber auch in die Zeichenebene hinein (y-Richtung) oder aber entlang beliebiger 3-dimensionaler Kurven im Raum. Wie der FIG 2 ebenfalls zu entnehmen ist, wird in dem Ausführungsbeispiel die Bewegung des Werkzeugs F relativ zu dem Werkstück W auf den Tool Center Point (TCP) M des Werkzeugs F bezogen. Der Bahnabschnitt A soll in der durch den Pfeil angedeuteten Bewegungsrichtung durchlaufen werden.

Die Erfindung beschreibt nun eine Lösung dafür, dass zu einem späteren Zeitpunkt und bei einem gleichen Werkstück oder an einer anderen Position desselben Werkstücks die exakt gleiche Bewegung erneut durchgeführt werden soll, oder dass am Ende des Bahnabschnitts A dieser in umgekehrter Richtung mit dem Werkzeug F abgefahren werden soll, ohne dass dafür alle erforderlichen Sollwerte, die der Regeleinrichtung zur Ausführung der Bewegung entlang des Bahnabschnitts A vorgegeben worden sind, erneut berechnet werden müssen.

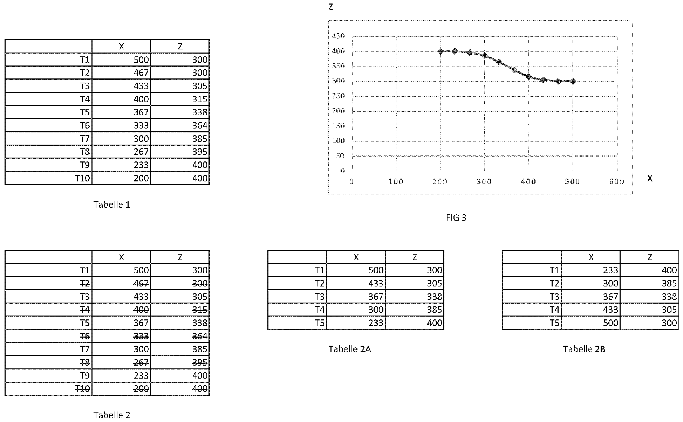

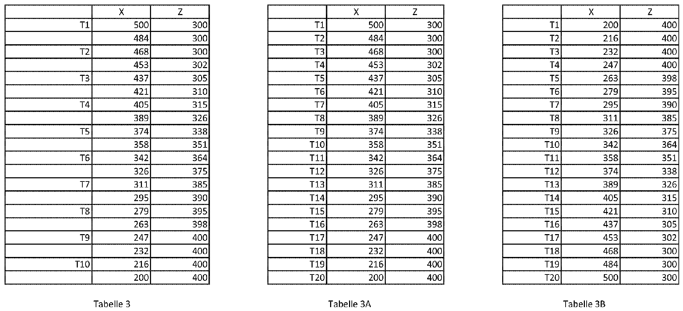

FIG 3 veranschaulicht nochmals den in FIG 2 dargestellten Bahnabschnitt A in der x-z-Ebene, der in der durch den Pfeil angedeuteten Bewegungsrichtung von rechts nach links durchlaufen wird.

Aus dem vorgegebenen Bahnabschnitt A ermittelt die CNC-Steuerung wie oben beschrieben Lagesollwerte für die X- und die Z-Achse der Maschine, die den Reglern der Achsen in einem bestimmten Interpolationstakt vorgegeben werden, so dass sich durch die entsprechend diesen Vorgaben gleichzeitig im Achsverbund ausgeführten Bewegungen der einzelnen Achsen (hier: X- und Z-Achse) insgesamt die vorgegebene Bewegung des Werkzeugs entlang des Bahnabschnitts A mit vorgegebener Bahngeschwindigkeit (Vorschubgeschwindigkeit) ergibt.

Nicht den realen Gegebenheiten entsprechend und rein zur Erläuterung der Erfindung zeigt Tabelle Tab 1 die Lagesollwerte für die X- und die Z-Achse für die Taktzeitpunkte (Takte) T1 bis T10 eines bestimmten Interpolationstaktes. Die Periodendauer des Interpolationstaktes einer CNC-Steuerung liegt gewöhnlich im Bereich von Millisekunden (ms), z.B. 5 ms. Daher wären für die veranschaulichte Bewegung in Relation zu dem dargestellten Werkzeug viele tausend Interpolationstakte (Perioden des Interpolationstaktes) zu durchlaufen, was die Veranschaulichung erschweren und verkomplizieren würde. Daher wird hier bewusst von den realen Verhältnissen abgewichen und die Bewegung anhand von lediglich 10 Periodendauern des Interpolationstaktes beschrieben.

Auf Basis dieser Vereinfachung zeigt nun die Tabelle 1 die Lagesollwerte für die X-Achse und die Z-Achse für die Taktzeitpunkte T1 bis T10.

Die Tabellen 2, 2A und 2B veranschaulichen die Vorgehensweise, die zu einer Verdoppelung der Geschwindigkeit der Bewegung führt. Hierzu wird - wie in Tabelle 2 veranschaulicht-jede zweite Zeile der Tabelle gestrichen, so dass nur noch halb so viele Taktperioden übrigbleiben. Das Ergebnis ist aus der Tabelle 2A ersichtlich. Da die Bewegungen der einzelnen Achsen nun in der Hälfte der zuvor vorgesehenen Takte und damit der ursprünglich benötigten Zeit, nämlich in nur noch 5 Takten, durchgeführt werden, hat sich die Bewegungsgeschwindigkeit verdoppelt.

Tabelle 2B veranschaulicht analog den Fall der Verdoppelung der Geschwindigkeit, jedoch in umgekehrter Bewegungsrichtung. Die Reihenfolge der Lagesollwerte ist entsprechend gegenüber der Tabelle 2A vertauscht.

Die Tabellen 3, 3A und 3B veranschaulichen nun den Fall, dass jeweils zwischen zwei benachbarten Interpolationstakten und den damit verbundenen Lagesollwerten ein Zwischenwert, sowohl die X-Achse als auch die Z-Achse betreffend, eingefügt wird. Zum Durchfahren des vorgegebenen Bahnabschnitts A sind somit anstatt 10 nun 20 Takte (Taktperioden) vorgesehen. Bei gleicher Periodendauer ist dafür die doppelte Zeit gegenüber der ursprünglichen Bewegung erforderlich. Die Geschwindigkeit wurde dadurch halbiert. Aus Tabelle 3A ist das Ergebnis dieser Vorgehensweise für die Wiederholung der Bewegung mit halber Geschwindigkeit in positiver Bewegungsrichtung (analog zu der ursprünglichen Bewegungsrichtung) und aus Tabelle 3B für die umgekehrte Bewegungsrichtung ersichtlich.

Andere Geschwindigkeit können nach demselben Prinzip leicht dadurch erreicht werden, dass nach jedem Takt eine bestimmte Anzahl an Takten gestrichen wird oder dass zwischen zwei benachbarte Takte eine bestimmte Anzahl an Zwischenwerten eingefügt wird. Die Geschwindigkeit kann damit in einfacher Weise in diskreten Schritten variiert werden.

Die nachfolgenden Tabellen und Figuren veranschaulichen nun eine Verallgemeinerung des oben beschriebenen Ansatzes, durch den eine quasi kontinuierliche Veränderung der Geschwindigkeit möglich wird. Hierfür werden die Lagesollwerte der X-Achse und der Z-Achse für den relevanten Zeitraum jeweils in Funktionen über der Zeit überführt. Diesbezüglich sind aus der Mathematik eine Vielzahl an Algorithmen bekannt, die sich insbesondere hinsichtlich Rechenaufwand und Genauigkeit unterscheiden.

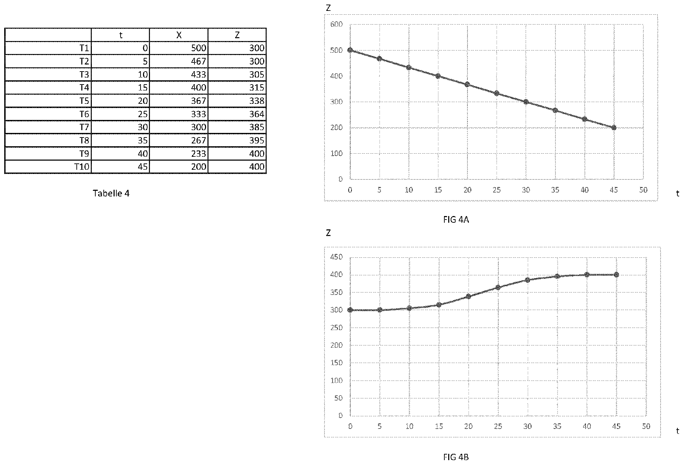

In Tabelle 4 ist nun im Unterschied zu Tabelle 2 eine Spalte t mit Taktzeitpunkten eingefügt, so dass den Lagesollwerten für die X- und die Z-Achse neben dem Takt (T1 bis T10) noch ein Zeitpunkt in einem Zeitbereich von 0 bis 45 (auf eine Maßeinheit wird hier aus dem oben erläuterten Grund bewusst verzichtet) zugeordnet ist. In den Figuren FIG 4A und 4B ist der sich ergebende Zusammenhang zwischen den Zeitpunkten und den dazugehörigen Lagesollwerten für die X-Achse (FIG 4A) und die Z-Achse (FIG 4B) jeweils als Funktion dargestellt.

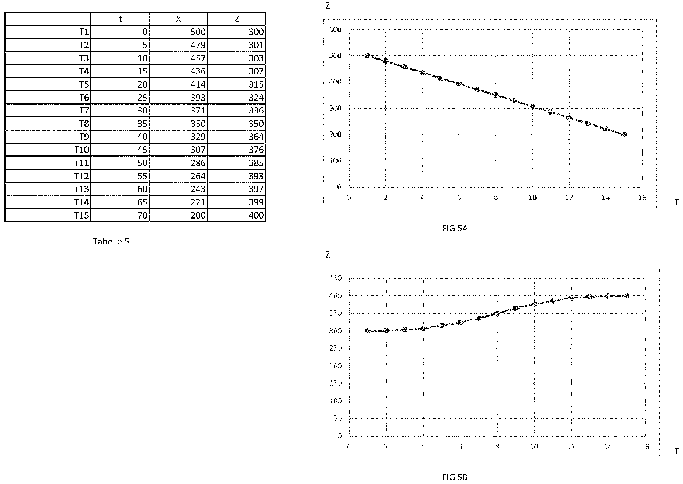

Als Ausführungsbeispiel sein nun angenommen, dass die Geschwindigkeit um ein Drittel (33,3 %) verringert werden soll. Es werden daher an Stelle von ursprünglich 10 vorgesehenen Taktperioden nun 15 Taktperioden vorgesehen. Dafür werden die aus FIG 4A und FIG 4B ersichtlichen Funktionsgrafen in 15 äquidistanten Zeitpunkten abgetastet. Das Ergebnis ist in den Figuren FIG 5A und FIG 5B sowie der daraus abgeleiteten Tabelle 5 veranschaulicht, bei denen die Bewegung der jeweiligen Achse jeweils in 14 Zeitabschnitte gleicher Dauer eingeteilt ist.

Alternativ können für die in den Figuren FIG 5A und FIG 5B dargestellten Funktionsgrafen auch Funktionsgleichungen bestimmt werden. Die gesuchten Werte können dann anstatt durch Abtastung auch rechnerisch bestimmt werden.

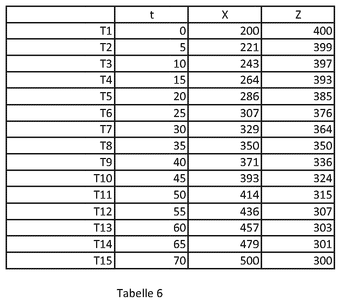

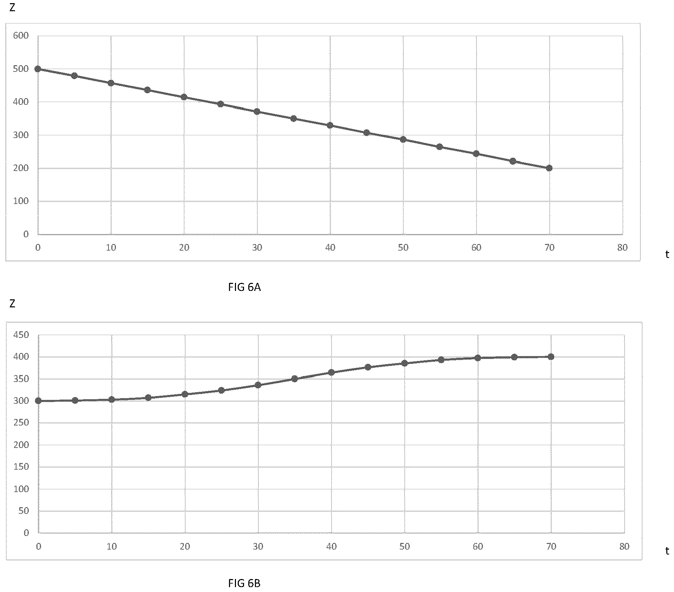

Wie zuvor bereits erläutert, ist die Periodendauer des Interpolationstaktes fest vorgegeben (im Ausführungsbeispiel 5 Zeiteinheiten). Die 15 veranschaulichten Perioden (T1 bis T15) benötigen daher nicht mehr 45, sondern 70 Zeiteinheiten. Die resultierenden Funktionen im vorgegebenen Interpolationstakt sind in den Figuren FIG 6A und FIG 6B veranschaulicht. Der Zusammenhang ist ebenfalls aus Tabelle 5 ersichtlich.

Diese Vorgehensweise lässt sich analog auf beliebige Änderungen der Geschwindigkeit übertragen, wodurch sich zumindest näherungsweise eine stufenlose Veränderung derselben erreichen lässt.

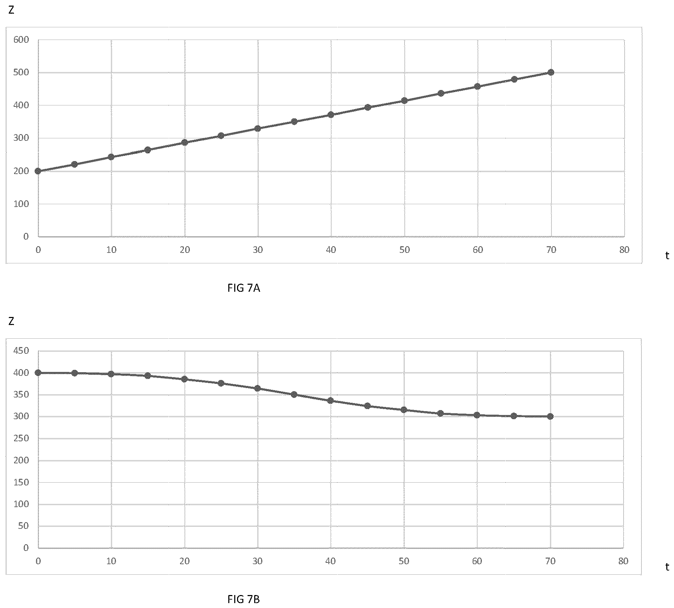

Tabellen 6 mit den zugehörigen Figuren 7A und 7B veranschaulichen den Fall, dass die um ein Drittel verringerte Verfahrgeschwindigkeit nun in umgekehrter Bewegungsrichtung erfolgen soll, z.B. in Form einer Rückzugsbewegung. Die Lagesollwerte für die X- und die Z-Achse sind daher gegenüber Tabelle 5 bzw. den Figuren FIG 6A und FIG 6B entsprechend vertauscht.

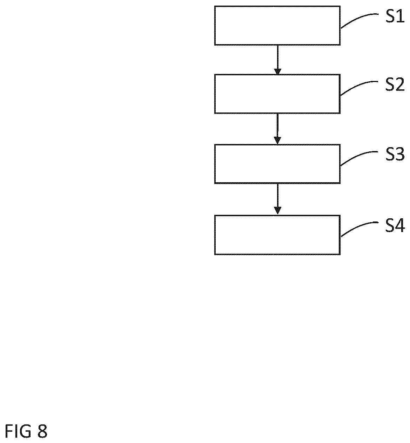

Nachfolgend werden die wesentlichen Verfahrensschritte bei der Durchführung eines erfindungsgemäßen Verfahrens nochmals in Form eines Ablaufdiagramms gemäß FIG 8 verdeutlicht.

In einem ersten Verfahrensschritt S1 werden eine Steuereinrichtung für eine Maschine sowie eine Maschine mit wenigstens zwei regelbaren Achsen zur Bewegung eines von der Maschine umfassten oder mit der Maschine verbundenen Objekts entlang einer vorgegebenen Bahnkurve bereitgestellt, wobei jede Achse wenigstens einen Antrieb umfasst, dem eine Regeleinrichtung zugeordnet ist.

In einem zweiten Verfahrensschritt S2 werden mittels der Steuereinrichtung eine erste Anzahl erster Sollwerte für jede Achse derart bestimmt, dass wenn die erste Anzahl erster Sollwerte in einem Interpolationstakt der Regeleinrichtung zugeführt werden, sich die Achsen derart bewegen, dass sich das Objekt mit einer vorgegebenen ersten Geschwindigkeit entlang wenigstens eines Bahnabschnitts der vorgegebenen Bahnkurve bewegt.

In einem dritten Verfahrensschritt S3 werden mittels der Steuereinrichtung anhand der ersten Anzahl erster Sollwerte eine zweite, von der ersten Anzahl verschiedene Anzahl an zweiten Sollwerten bestimmt, die, wenn sie der Regeleinrichtung in dem Interpolationstakt vorgegeben werden, das Objekt mit einer von der ersten Geschwindigkeit verschiedenen zweiten Geschwindigkeit zumindest näherungsweise entlang des Bahnabschnitts bewegen.

In einem vierten Verfahrensschritt S4 werden die ermittelten zweiten Sollwerte der Regeleinrichtung in dem Interpolationstakt vorgegeben und das Objekt mit der von der ersten Geschwindigkeit verschiedenen zweiten Geschwindigkeit zumindest näherungsweise entlang des Bahnabschnitts bewegt.

Bei der Maschine kann es sich sowohl um eine reale Maschine mit realen Maschinenachsen oder eine virtuelle Maschine mit virtuellen Maschinenachsen handeln.

Als Simulationsrechner zur Simulation des Verhaltens der virtuellen Maschine kommen insbesondere die Steuereinrichtung selbst oder eine mit der Steuereinrichtung verbundene, externe Recheneinrichtung, z.B. ein CAD/CAM/PP-System in Frage.

## Patentansprüche

1. Steuereinrichtung (3) für eine Maschine (2) mit wenigstens zwei regelbaren Achsen (X, Y, Z, B, C) zur Bewegung eines von der Maschine (2) umfassten oder mit der Maschine (2) verbundenen Objekts (13) entlang einer vorgegebenen Bahnkurve,
wobei jede Achse (X, Y, Z, B, C) wenigstens einen Antrieb umfasst, dem eine Regeleinrichtung zugeordnet ist,
wobei die Steuereinrichtung (3) eine erste Anzahl erster Sollwerte für jede Achse (X, Y, Z, B, C) derart bestimmt, dass wenn die erste Anzahl erster Sollwerte in einem Interpolationstakt der Regeleinrichtung zugeführt werden, sich die Achsen (X, Y, Z, B, C) derart bewegen, dass sich das Objekt (13) mit einer vorgegebenen ersten Geschwindigkeit entlang wenigstens eines Bahnabschnitts (A) der vorgegebenen Bahnkurve bewegt,
wobei die Steuereinrichtung (3) anhand der ersten Anzahl erster Sollwerte eine zweite, von der ersten Anzahl verschiedene Anzahl an zweiten Sollwerten bestimmt, die, wenn sie der Regeleinrichtung in dem Interpolationstakt vorgegeben werden, das Objekt (13) mit einer von der ersten Geschwindigkeit verschiedenen zweiten Geschwindigkeit zumindest näherungsweise entlang des Bahnabschnitts (A) bewegen.

2. Steuereinrichtung (3) nach Anspruch 1, wobei das Objekt (13) als Maschinenelement, insbesondere als Werkzeug- oder Werkstückaufnahme ausgebildet ist.

3. Steuereinrichtung (3) nach Anspruch 1, wobei das Objekt (13) als Werkzeug (13) ausgebildet ist, welches insbesondere in eine Werkzeugaufnahme (12) der Maschine (2) eingespannt ist.

4. Steuereinrichtung (3) nach Anspruch 1, wobei das Objekt als Werkstück (16, W) ausgebildet ist, welches insbesondere in eine Werkstückaufnahme (15) der Maschine (2) eingespannt ist.

5. Steuereinrichtung (3) nach einem der vorherigen Ansprüche, wobei die erste und/oder die zweite Geschwindigkeit durch einen Benutzer der Steuereinrichtung (3) vorgebbar ist.

6. Steuereinrichtung (3) nach einem der vorherigen Ansprüche, wobei die ersten und die zweiten Sollwerte derart bestimmt werden, dass sich das Objekt (13) mittels der ersten Sollwerte in einer ersten Bewegungsrichtung entlang des Bahnabschnitts (A) bewegt und mittels der zweiten Sollwerte in einer der erste Bewegungsrichtung entgegengesetzten zweiten Bewegungsrichtung entlang des Bahnabschnitts (A) bewegt.

7. Steuereinrichtung (3) nach einem der vorherigen Ansprüche, wobei die Sollwerte Lagesollwerte und/oder Drehzahlsollwerte und/oder Geschwindigkeitssollwerte und/oder Beschleunigungssollwerte und/oder Rucksollwerte und/oder Spannungssollwerte und/oder Stromsollwerte umfassen.

8. Steuereinrichtung (3) nach einem der vorherigen Ansprüche, wobei die Sollwerte in einer Speichereinrichtung der Steuereinrichtung (3) als ursprüngliche Sollwerte gespeichert werden, wobei anhand der ursprünglichen Sollwerte eine Funktion ermittelt wird, wobei anhand der Funktion neue Sollwerte ermittelt werden, die ebenfalls die Funktion beschreiben und wobei eine erste Anzahl ursprünglicher, die Funktion beschreibender Sollwerte verschieden ist von einer zweiten Anzahl neuer, die Funktion beschreibender Sollwerte.

9. Steuereinrichtung (3) nach Anspruch 8, wobei die Funktion zunächst geglättet wird und die neuen Sollwerte anhand der geglätteten Funktion ermittelt werden.

10. Steuereinrichtung (3) nach einem der vorherigen Ansprüche, wobei die zweiten Sollwerte aus den ersten Sollwerten dadurch hervorgehen, dass die zweiten Sollwerte nur jeden n-ten Sollwert der ersten Sollwerte umfassen, wobei n eine natürliche Zahl beginnend mit der Zahl 2 ist.

11. Steuereinrichtung (3) nach einem der vorherigen Ansprüche, wobei die zweiten Sollwerte aus den ersten Sollwerten dadurch hervorgehen, dass zwischen zwei benachbarte erste Sollwerte jeweils ein Zwischenwert oder n Zwischenwerte eingefügt sind, wobei n eine natürliche Zahl beginnend mit der Zahl 2 ist.

12. Verfahren zum Betrieb einer Steuereinrichtung (3) für eine Maschine (2) mit wenigstens zwei regelbaren Achsen (X, Y, Z, B, C) zur Bewegung eines von der Maschine (2) umfassten oder mit der Maschine (2) verbundenen Objekts (13) entlang einer vorgegebenen Bahnkurve,
wobei jede Achse (X, Y, Z, B, C) wenigstens einen Antrieb umfasst, dem eine Regeleinrichtung zugeordnet ist,
wobei mittels der Steuereinrichtung (3) eine erste Anzahl erster Sollwerte für jede Achse (X, Y, Z, B, C) derart bestimmt werden, dass wenn die erste Anzahl erster Sollwerte in einem Interpolationstakt der Regeleinrichtung zugeführt werden, sich die Achsen (X, Y, Z, B, C) derart bewegen, dass sich das Objekt (13) mit einer vorgegebenen ersten Geschwindigkeit entlang wenigstens eines Bahnabschnitts (A) der vorgegebenen Bahnkurve bewegt,
wobei mittels der Steuereinrichtung (3) anhand der ersten Anzahl erster Sollwerte eine zweite, von der ersten Anzahl verschiedene Anzahl an zweiten Sollwerten bestimmt werden, die, wenn sie der Regeleinrichtung in dem Interpolationstakt vorgegeben werden, das Objekt (13) mit einer von der ersten Geschwindigkeit verschiedenen zweiten Geschwindigkeit zumindest näherungsweise entlang des Bahnabschnitts (A) bewegen.

13. Verfahren zum Betrieb einer Steuereinrichtung (3) für eine virtuelle Maschine (2) mit wenigstens zwei virtuellen, regelbaren Achsen (X, Y, Z, B, C) zur Simulation einer Bewegung eines von der virtuellen Maschine (2) umfassten oder mit der virtuellen Maschine (2) verbundenen virtuellen Objekts (13) entlang einer vorgegebenen Bahnkurve,
wobei jede virtuelle Achse (X, Y, Z, B, C) wenigstens einen virtuellen Antrieb umfasst, dem eine virtuelle Regeleinrichtung zugeordnet ist,
wobei mittels der Steuereinrichtung (3) eine erste Anzahl erster Sollwerte für jede virtuelle Achse (X, Y, Z, B, C) derart bestimmt werden, dass wenn die erste Anzahl erster Sollwerte in einem Interpolationstakt der Regeleinrichtung zugeführt werden, sich die virtuellen Achsen (X, Y, Z, B, C) derart bewegen, dass sich das virtuelle Objekt (13) mit einer vorgegebenen ersten Geschwindigkeit entlang wenigstens eines Bahnabschnitts (A) der vorgegebenen Bahnkurve bewegt,
wobei mittels der Steuereinrichtung (3) anhand der ersten Anzahl erster Sollwerte eine zweite, von der ersten Anzahl verschiedene Anzahl an zweiten Sollwerten bestimmt werden, die, wenn sie der Regeleinrichtung in dem Interpolationstakt vorgegeben werden, das virtuelle Objekt (13) mit einer von der ersten Geschwindigkeit verschiedenen zweiten Geschwindigkeit zumindest näherungsweise entlang des Bahnabschnitts (A) bewegen.

14. Computerprogrammprodukt mit Programmbefehlen zur Durchführung des Verfahrens nach Anspruch 13.
